# EUROPÄISCHE PATENTSCHRIFT

(11) **EP 3 196 556 B1**
(45) Veröffentlichungstag und Bekanntmachung des Hinweises auf die Patenterteilung: **31.10.2018**
(21) Anmeldenummer: 16204961.3
(22) Anmeldetag: 19.12.2016
(51) Int. Cl.: F24C 15/20, F16B 21/02, F16B 5/10

(54) **DUNSTABZUGSHAUBE**
EXTRACTOR HOOD
HOTTE ASPIRANTE

(30) Priorität: 25.01.2016 DE 102016101238
(43) Veröffentlichungstag der Anmeldung: 26.07.2017
(73) Patentinhaber: Miele & Cie. KG, 33332 Gütersloh (DE)
(72) Erfinder: Robbert, Andreas, 59469 Ense-Lüttringen (DE); Schüsseler, Dirk, 29821 Arnsberg (DE); Eckardt, Gerd, 59846 Sundern (DE)

(56) Entgegenhaltungen:
- EP-A1- 2 546 578
- EP-A2- 1 111 312
- EP-A2- 1 340 944
- EP-A2- 1 621 819
- WO-A1-95/13479
- WO-A1-2005/075893
- CN-A- 104 296 209
- CN-Y- 201 368 518
- DE-A1- 2 804 848
- DE-A1-102007 021 318
- US-A- 3 566 585
- US-A- 3 744 101
- US-A1- 2008 072 753

## Beschreibung

Die vorliegende Erfindung betrifft eine Dunstabzugshaube umfassend wenigstens einen Strömungsquerschnitt mit wenigstens einer Filtereinrichtung. Dabei wird durch den Strömungsquerschnitt geführte Luft durch die Filtereinrichtung geführt, um diese von Gerüchen und/oder Fettbestandteilen zu befreien. Die Filtereinrichtung ist an wenigstens einer Rahmeneinrichtung an dem Strömungsquerschnitt befestigt, wobei die Filtereinrichtung zur Befestigung an der Rahmeneinrichtung wenigstens eine Befestigungseinrichtung aufweist und wobei die Rahmeneinrichtung wenigstens eine Aufnahme für die Befestigungseinrichtung aufweist.

Eine derartige Dunstabzugshaube gemäß dem Oberbegriff des Anspruchs 1 ist aus der Druckschrift EP 2 546 578 A1 bekannt. Diese zeigt eine Fettfiltereinrichtung, die zur Befestigung an einem Gehäuse der Dunstabzugshaube ein hakenförmiges Befestigungselement aufweist. Mittels des an einer ersten Seite der Fettfiltereinrichtung angeordneten Befestigungselements wird die Fettfiltereinrichtung an dem Gehäuse angeordnet und dann in eine Funktionslage geschwenkt. In der Funktionslage wirkt ein an dem Gehäuse befestigter Magnet auf eine zu der ersten Seite entfernt liegende zweite Seite der Fettfiltereinrichtung, wobei die Fettfiltereinrichtung durch die Kraft des Magneten in der Funktionslage gehalten wird.

Eine hinsichtlich der Befestigung der Fettfiltereinrichtung ähnliche Dunstabzugshaube zeigt die Druckschrift WO 2005/075893 A1, wobei an einem Endabschnitt der Fettfiltereinrichtung, welcher entfernt zum Abschnitt der Fettfiltereinrichtung ist, an dem das Befestigungselement angeordnet ist, eine Verriegelungseinrichtung zum Verriegeln der Fettfiltereinrichtung mit dem Gehäuse vorgesehen ist. Die Verriegelungseinrichtung ist ein beweglicher Riegelstift, welcher in das Gehäuse und in die Seitenfläche der Fettfiltereinrichtung eingreift.

Weiterer relevanter Stand der Technik ist zu finden in WO 95/13479, DE 10 2007 021 318 A1, US 2008/0072753 A1, EP1 111 312 A2, und US 3,566,585.

In Dunstabzugshauben wird in der Regel wenigstens ein Fettfilter verwendet, um den von einer Kochstelle aufsteigenden Wrasen von Fettbestandteilen zu reinigen. Weiterhin ist gerade für einen Umluftbetrieb oft wenigstens ein weiterer Filter, beispielsweise ein Aktivkohlefilter, vorgesehen, durch welchen die angesaugte Luft hindurchgeführt wird. Ein solcher Aktivkohlefilter dient der Eliminierung von unangenehmen Gerüchen, sodass insbesondere im Umluftbetrieb möglichst saubere und geruchsarme Luft zurück in die Küche geblasen wird.

Die Filter einer Dunstabzugshaube sind in der Regel entnehmbar vorgesehen, sodass ein Benutzer sie in regelmäßigen Abständen wechseln und/oder zur Reinigung aus der Dunstabzugshaube entnehmen kann.

Nachteilig bei einigen bekannten Befestigungsmethoden solcher Filter an der Dunstabzugshaube ist jedoch, dass die Montage recht kompliziert ist. Weiterhin sind oft aufwändige konstruktive Anpassungen notwendig, um die Befestigung eines gewünschten Filters an einer Dunstabzugshaube zu ermöglichen.

Es ist daher die Aufgabe der vorliegenden Erfindung, eine Dunstabzugshaube zur Verfügung zu stellen, bei welcher ein Filter schnell und einfach eingesetzt und/oder entnommen werden kann.

Diese Aufgabe wird gelöst durch eine Dunstabzugshaube mit den Merkmalen des Anspruchs 1. Bevorzugte Weiterbildungen der Erfindung sind Gegenstand der Unteransprüche. Weitere Vorteile und Merkmale der Erfindung ergeben sich aus dem Ausführungsbeispiel.

Die erfindungsgemäße Dunstabzugshaube umfasst wenigstens einen Strömungsquerschnitt mit wenigstens einer Filtereinrichtung. Dabei wird die durch den Strömungsquerschnitt geführte Luft durch die Filtereinrichtung geführt, um die Luft zu reinigen. Die Filtereinrichtung ist dabei an wenigstens einer Rahmeneinrichtung an dem Strömungsquerschnitt befestigt, wozu die Filtereinrichtung zur Befestigung an der Rahmeneinrichtung wenigstens eine Befestigungseinrichtung aufweist. An der Rahmeneinrichtung ist wenigstens eine Aufnahme für die Befestigungseinrichtung vorgesehen. Weiterhin ist die Befestigungseinrichtung als Schnellverschlusseinrichtung ausgebildet, welche wenigstens einen Bedienabschnitt und wenigstens einen Befestigungsabschnitt aufweist. Die Filtereinrichtung ist durch eine Drehbewegung der Schnellverschlusseinrichtung über den Befestigungsabschnitt der Schnellverschlusseinrichtung an der Rahmeneinrichtung fixierbar.

Die Filtereinrichtung ist insbesondere als Aktivkohlefilter und/oder als Aktivkohlekassette und/oder als Fettfilter ausgebildet. Über eine Aktivkohlekassette bzw. einen Aktivkohlefilter werden insbesondere Gerüche aus der durch die Dunstabzugshaube geleiteten Luft entfernt. Ein Fettfilter befreit den in die Dunstabzugshaube geführten Wrasen insbesondere von Fettbestandteilen. Allgemein kann die Filtereinrichtung vorzugsweise vor und/oder hinter einem Gebläse der Dunstabzugshaube angeordnet sein. So wird die von dem Gebläse angesaugte Luft je nach Positionierung der Filtereinrichtung durch diese gesaugt oder gedrückt.

Die Rahmeneinrichtung wird insbesondere durch wenigstens ein Gehäuseteil der Dunstabzugshaube zur Verfügung gestellt. Die Aufnahmen in der Rahmeneinrichtung sind dabei vorzugsweise als Durchgangsöffnungen bzw. Öffnungen und/oder Ausnehmungen in der Rahmeneinrichtung vorgesehen, sodass eine Wirkverbindung zwischen der Aufnahme bzw. der Rahmeneinrichtung und dem Befestigungsabschnitt der Schnellverschlusseinrichtung hergestellt werden kann.

Die Filtereinrichtung erfasst wenigstens eine als Schnellverschlusseinrichtung ausgebildete Befestigungseinrichtung. Dabei ist hierunter insbesondere zu verstehen, dass die Schnellverschlusseinrichtung im Wesentlichen einteilig mit der Filtereinrichtung gebildet ist und/oder als separates Bauteil vorgesehen ist, welches der Filtereinrichtung zugeordnet ist bzw. wenigstens abschnittsweise an und/oder in dieser angeordnet ist.

Der Bedienabschnitt und der Befestigungsabschnitt der Schnellverschlusseinrichtung sind über wenigstens einen Verbindungsabschnitt, beispielsweise ein stab- und/oder stangenförmiges Element miteinander verbunden. So kann eine an dem Bedienabschnitt ausgeführte Drehbewegung auf einen weiter entfernten Befestigungsabschnitt übertragen werden.

Wenn nur eine einzige Befestigungseinrichtung zur Befestigung der Filtereinrichtung an der Rahmeneinrichtung vorgesehen ist, ist diese insbesondere im Wesentlichen mittig an der Filtereinrichtung vorgesehen, sodass die Filtereinrichtung im Wesentlichen ausbalanciert über die Schnellverschlusseinrichtung an der Rahmeneinrichtung gehalten ist und im Wesentlichen stabil an dieser hängt. Sind mehrere Befestigungseinrichtungen vorgesehen, können diese auch zweckmäßig an einem Randabschnitt der Filtereinrichtung vorgesehen werden. Wenn mehrere Befestigungseinrichtungen vorgesehen sind, ist insbesondere wenigstens eine Dreipunktbefestigung bevorzugt, sodass die Filtereinrichtung stabil an dem Strömungsquerschnitt aufgenommen ist.

Die erfindungsgemäße Dunstabzugshaube bietet viele Vorteile. Ein erheblicher Vorteil ist, dass durch die erfindungsgemäß ausgestaltete Befestigungseinrichtung eine besonders schnelle und einfache Montage einer Filtereinrichtung an einem Strömungsquerschnitt einer Dunstabzugshaube vorgenommen werden kann.

Dies ist dadurch möglich, dass die Befestigungseinrichtung als Schnellverschlusseinrichtung ausgebildet ist, sodass ein Benutzer eine Filtereinrichtung allein durch eine Drehbewegung der Befestigungseinrichtung bzw. der Schnellverschlusseinrichtung an einem Strömungsquerschnitt bzw. einer Rahmeneinrichtung fixieren kann.

Dabei erfolgt eine derartige schnelle Montage einer Filtereinrichtung mittels der Schnellverschlusseinrichtung insbesondere werkzeuglos, was die Montage bzw. Demontage zusätzlich erleichtert. So kann die Filtereinrichtung schnell und einfach montiert und auch wieder von dem Strömungsquerschnitt entfernt werden.

Erfindungsgemäß ist wenigstens eine weitere Befestigungseinrichtung vorgesehen, welche als Hakeneinrichtung ausgebildet ist. Mit einer derartigen Hakeneinrichtung kann die Filtereinrichtung beispielsweise zunächst in eine oder mehrere Aufnahmen eingehängt werden, wodurch die Filtereinrichtung schon derart an der Rahmeneinrichtung vorinstalliert ist, dass ein Benutzer die Filtereinrichtung mittels der Schnellverschlusseinrichtung besonders einfach an der Rahmeneinrichtung fixieren kann. Bei einer derartigen Ausgestaltung ist insbesondere bevorzugt, dass wenigstens zwei Hakeneinrichtungen vorgesehen sind, sodass zusammen mit der Schnellverschlusseinrichtung eine Dreipunktbefestigung zur Verfügung gestellt wird. Eine Hakeneinrichtung wird erfindungsgemäß vorzugsweise durch einen gebogenen bzw. leicht gebogenen Haken zur Verfügung gestellt, welcher an der Filtereinrichtung befestigt ist oder durch wenigstens einen Teil der Filtereinrichtung zur Verfügung gestellt wird. Ein solcher gebogener bzw. leicht gebogener Haken kann einfach in eine Aufnahme eingehängt werden. In anderen Ausgestaltungen kann eine Hakeneinrichtung vorteilhaft auch als gerades Element bzw. als gerader Stab ausgebildet sein, welcher beispielsweise in eine Öffnung eingesteckt wird.

Erfindungsgemäß ist die Schnellverschlusseinrichtung dazu geeignet und ausgebildet, eine Festlegung der Filtereinrichtung durch eine Drehbewegung der Schnellverschlusseinrichtung zu bewirken, welche kleiner/gleich 100° ist, bevorzugt kleiner/gleich 90° ist und besonders bevorzugt zwischen 90° und 45° liegt. So wird es einem Benutzer möglich, durch eine minimale Drehbewegung die Filtereinrichtung mittels der Schnellverschlusseinrichtung an der Rahmeneinrichtung zu befestigen. Insbesondere wird ein sicherer Halt der an dem Strömungsquerschnitt bewirkt, ohne dass wie bei geschraubten Filtereinrichtungen eine Schraube über nahezu die gesamte Gewindelänge für einen sicheren Halt eingeschraubt werden muss.

In zweckmäßigen Ausgestaltungen ist wenigstens eine Befestigungseinrichtung an wenigstens einem Randabschnitt der Filtereinrichtung angeordnet. Dabei ist eine am Rand vorgesehene Anordnung der Befestigungseinrichtungen insbesondere dann zweckmäßig, wenn wenigstens zwei und insbesondere wenigstens drei Befestigungseinrichtungen vorgesehen sind. So ist insbesondere bevorzugt, dass wenigstens eine als Schnellverschlusseinrichtung ausgestaltete Befestigungseinrichtung am Rand bzw. an einem Randabschnitt der Filtereinrichtung angeordnet ist.

In vorteilhaften Ausgestaltungen umfasst die Filtereinrichtung wenigstens ein Gehäuse, an welchem die Hakeneinrichtung angeordnet ist. Dabei kann vorzugsweise eine Hakeneinrichtung einteilig mit dem Gehäuse der Filtereinrichtung gefertigt sein und/oder durch wenigstens ein separates Bauteil zur Verfügung gestellt werden, welches an dem Gehäuse der Filtereinrichtung befestigt wird. Ein derartiges Gehäuse der Filtereinrichtung ist vorzugsweise als Art Kassette ausgebildet, in welche ein Filterkern eingelegt werden kann. Dabei kann als Filterkern beispielsweise ein Aktivkohlekern und/oder ein Filterkern zum Herausfiltern von Fettbestandteilen aus Wrasen vorgesehen sein.

Erfindungsgemäß ist wenigstens eine Schnellverschlusseinrichtung wenigstens abschnittsweise durch die Filtereinrichtung hindurchgeführt. Dabei ist die Schnellverschlusseinrichtung verliersicher und drehbar in der Filtereinrichtung gehalten bzw. gelagert. Insbesondere wenn die Filtereinrichtung als Filterkassette ausgebildet ist, ist die Schnellverschlusseinrichtung wenigstens abschnittsweise durch die Filterkassette hindurchgeführt und wenigstens abschnittsweise in dieser verliersicher und drehbar gehalten bzw. gelagert. Die Schnellverschlusseinrichtung stützt sich dann auf einer Seite gegen die Filtereinrichtung ab und wird mit der anderen Seite an der Rahmeneinrichtung befestigt.

Besonders bevorzugt sind zwei Befestigungseinrichtungen, insbesondere eine Schnellverschlusseinrichtung und eine Hakeneinrichtung, an unterschiedlichen Seiten der Filtereinrichtung vorgesehen. Hier ist insbesondere bevorzugt, dass die beiden Befestigungseinrichtungen an gegenüberliegenden Seiten der Filtereinrichtung angeordnet sind. Dabei können die beiden Befestigungseinrichtungen zweckmäßig an gegenüberliegenden Seiten des Gehäuses der Filtereinrichtung durch dieses hindurchgeführt oder an diesem befestigt sein.

Erfindungsgemäß umfasst die Rahmeneinrichtung wenigstens ein Schutzgitter und/oder ist wenigstens abschnittsweise als Schutzgitter ausgebildet. Unter einem derartigen Schutzgitter wird vorzugsweise eine gitterartige Struktur verstanden, mittels welcher verhindert wird, dass ein Benutzer weiter bzw. tiefer in die Dunstabzugshaube beispielsweise in die Nähe des Gebläses eingreifen kann. Dabei ist das Schutzgitter als Art Lochblech ausgebildet sein, welches als Lochblech mit Langlöchern ausgebildet sein kann. Die Aufnahmen für die Befestigungseinrichtungen werden durch die Freiräume des Schutzgitters bzw. durch die Löcher in dem Lochblech zur Verfügung gestellt.

Bevorzugt weist der Bedienabschnitt wenigstens ein Bedienelement auf. Ein derartiges Bedienelement kann von einem Benutzer vorzugsweise ergriffen werden. Dann ist das Bedienelement insbesondere als Rändelgriff oder als Flügelgriff ausgebildet, sodass ein Benutzer die Schnellverschlusseinrichtung gut ergreifen und bedienen kann. In anderen Ausgestaltungen kann vorzugsweise der Bedienabschnitt auch wenigstens einen Formabschnitt umfassen, der zur Aufnahme wenigstens eines Werkzeuges geeignet ist. Dabei kann insbesondere eine Schlitz-, Kreuz- und/oder Sternaufnahme vorgesehen sein.

Vorzugsweise ist das Bedienelement in etwa gleich groß und/oder größer als wenigstens ein Verbindungsabschnitt zwischen dem Bedienabschnitt und dem Befestigungsabschnitt ausgebildet. So ist es möglich, dass dem Benutzer ein Bedienelement in einer ausreichenden Größe zur Verfügung gestellt wird, um eine nötige Kraft ausüben zu können, um die Filtereinrichtung mittels der Schnellverschlusseinrichtung an der Rahmeneinrichtung festzulegen. Weiterhin wird trotz des ausreichend großen Bedienabschnitts erreicht, dass der Verbindungsabschnitt nicht unnötig groß ausgestaltet werden muss, sodass nicht unnötig Filterfläche durch die Schnellverschlusseinrichtung verringert wird.

Bevorzugt umfasst der Bedienabschnitt wenigstens eine Abstützeinrichtung. Eine derartige Abstützeinrichtung dient dazu, die Filtereinrichtung im installierten Zustand gegen die Rahmeneinrichtung zu pressen. Dabei kann eine derartige Abstützeinrichtung beispielsweise in der Art bzw. Wirkweise einer Unterlegscheibe ausgebildet sein, welche vorzugsweise auch einteilig mit dem Bedienabschnitt gefertigt sein kann. Diese Abstützeinrichtung ist dann insbesondere derart ausgebildet, dass eine ausreichende Abstützung der Filtereinrichtung gegenüber der Rahmeneinrichtung erfolgen kann.

Erfindungsgemäß weist der Befestigungsabschnitt wenigstens ein Verriegelungselement auf. Ein derartiges Verriegelungselement kann verschiedene Ausgestaltungen aufweisen und ist insbesondere einteilig mit dem Verbindungsabschnitt bzw. mit dem Bedienabschnitt gefertigt. Das Verriegelungselement kann aber auch als separates Bauteil ausgeführt sein, welches an einem Ende des Verbindungsabschnitts befestigt wird. Dabei kann das Verriegelungselement insbesondere auf ein Gewinde am Ende des Verbindungsabschnitts aufgeschraubt werden, sodass eine vorbestimmte Distanz zwischen der Abstützeinrichtung und dem Verriegelungselement eingestellt werden kann.

Bevorzugt ist das Verriegelungselement im Wesentlichen länglich ausgebildet. Hierunter ist insbesondere zu verstehen, dass die eine Erstreckung des Verriegelungselements größer als die andere ist, sodass das Verriegelungselement in einer Orientierung bzw. Ausrichtung durch eine Aufnahme hindurchgeführt werden kann und nach einer Drehbewegung in der anderen Ausrichtung bzw. Orientierung in dieser festgelegt ist.

Erfindungsgemäß ist dann das Verriegelungselement in einer ersten Orientierung in eine Aufnahme einführbar bzw. durch eine Aufnahme hindurchführbar, wobei sich das Verriegelungselement in einer zweiten Orientierung gegen die Rahmeneinrichtung abstützt. Dann ist in der zweiten Orientierung das Verriegelungselement insbesondere nicht mehr aus der Aufnahme entnehmbar, sodass die Filtereinrichtung an der Rahmeneinrichtung fixiert ist. Der Wechsel zwischen der ersten Orientierung und der zweiten Orientierung des Verriegelungselements wird insbesondere durch eine Drehbewegung an dem Bedienabschnitt erreicht. Dann ist insbesondere bevorzugt, dass die erste Orientierung und die zweite Orientierung in etwa 90° zueinander gedreht sind.

Bevorzugt umfasst die Schnellverschlusseinrichtung wenigstens ein Vorbelastungselement. Ein derartiges Vorbelastungselement kann insbesondere wenigstens eine Feder umfassen, welche vorzugsweise an dem Verbindungsabschnitt zwischen dem Bedienabschnitt und dem Befestigungsabschnitt angeordnet ist.

Über ein derartiges Vorbelastungselement kann vorzugsweise eine gewisse Klemmkraft zwischen der Schnellverschlusseinrichtung, der Filtereinrichtung und der Rahmeneinrichtung bewirkt werden, sodass die Schnellverschlusseinrichtung sicher in der zweiten Orientierung gehalten wird, wenn die Filtereinrichtung an der Rahmeneinrichtung befestigt ist.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine rein schematische Darstellung einer erfindungsgemäßen Dunstabzugshaube in einer perspektivischen Ansicht;
- Figur 2: eine rein schematische Darstellung einer Rahmeneinrichtung und einer Filtereinrichtung einer erfindungsgemäßen Dunstabzugshaube in einer perspektivischen Ansicht;
- Figur 3: eine rein schematische Darstellung einer Filtereinrichtung mit einer Schnellverschlusseinrichtung einer erfindungsgemäßen Dunstabzugshaube in perspektivischen Ansichten;
- Figur 4: eine rein schematische Darstellung einer Schnellverschlusseinrichtung in einer Filtereinrichtung in einer Schnittansicht von der Seite; und
- Figur 5: eine rein schematische Darstellung der Montage einer Filtereinrichtung an einer Rahmeneinrichtung einer erfindungsgemäßen Dunstabzugshaube in perspektivischen Ansichten.

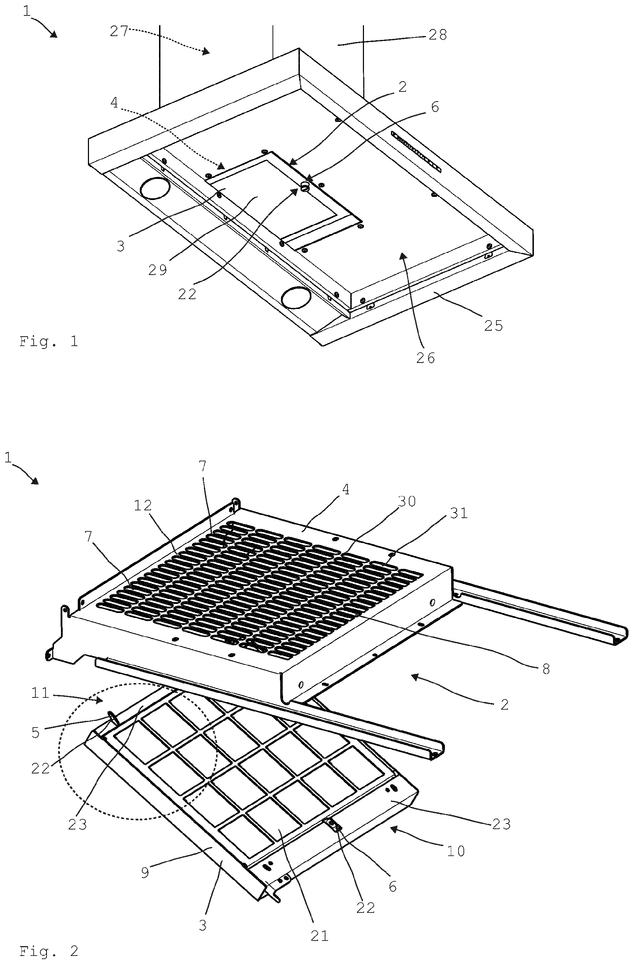

In Figur 1 ist rein schematisch eine erfindungsgemäße Dunstabzugshaube 1 in einer perspektivischen Ansicht von unten dargestellt. Die gezeigte Dunstabzugshaube 1 umfasst einen Wrasenleitschirm 25 mit einem Ansaugabschnitt 26. Über Ansaugabschnitt 26 wird von einer Kochstelle aufsteigender Wrasen in die Dunstabzugshaube 1 hineingesaugt. Dabei wird der aufsteigende Wrasen durch einen hier nicht dargestellten Fettfilter geleitet, welcher den aufsteigende Wrasen von Fettbestandteilen befreit. Der aufsteigende Wrasen wird über ein Gebläse 27 in die Dunstabzugshaube 1 bzw. in den Ansaugabschnitt 26 eingesaugt, wobei das Gebläse 27 in dem hier gezeigten Ausführungsbeispiel in einem Kamin 28 vorgesehen ist.

Zwischen dem Ansaugabschnitt 26 und dem Kamin 28 ist in dem gezeigten Ausführungsbeispiel ein freier Strömungsquerschnitt 2 vorgesehen, durch welchen angesaugte Luft hindurchströmen kann. In diesem Strömungsquerschnitt 2 ist ein eine Filtereinrichtung 3 vorgesehen, durch welchen die angesaugte Luft hindurchgeführt wird.

Die dargestellte Filtereinrichtung 3 ist als Aktivkohlefilter 29 ausgebildet, welcher die angesaugte Luft von Gerüchen befreit. Dies ist insbesondere dann vorteilhaft, wenn die Dunstabzugshaube 1 in einem Umluftbetrieb betrieben wird.

Die Filtereinrichtung 3 ist erfindungsgemäß an einer in Figur 1 nicht zu erkennen Rahmeneinrichtung 5 mittels einer Befestigungseinrichtung 22 fixiert, wobei die Befestigungseinrichtung 22 als Schnellverschlusseinrichtung 6 ausgebildet ist. Dadurch ist es möglich, die Filtereinrichtung 3 schnell und zudem einfach zu installieren und wieder zu entfernen.

In Figur 2 sind die Filtereinrichtung 3 und die Rahmeneinrichtung 4 der erfindungsgemäßen Dunstabzugshaube 1 gemäß Figur 1 in einer perspektivischen Ansicht dargestellt. Dabei ist zu erkennen, dass die Rahmeneinrichtung 4 ein Schutzgitter 12 umfasst bzw. abschnittsweise als Schutzgitter 12 ausgebildet ist. Das in dem gezeigten Ausführungsbeispiel als Lochblech 30 ausgebildet Schutzgitter 12 verhindert, dass ein Benutzer bei entnommener Filtereinrichtung 3 in den Kamin 28 bzw. in das Gebläse 27 greifen kann.

Die Rahmeneinrichtung 4 bzw. das Schutzgitter 12 weist Aufnahmen 7, 8 auf, welche hier durch Langlöcher 31 des Schutzgitters 12 bzw. des Lochblechs 30 zur Verfügung gestellt werden.

Die Filtereinrichtung 3 ist als Aktivkohlefilter 29 ausgebildet, welcher ein Gehäuse 9 bzw. eine Kassette 9 mit einem Aktivkohlekern 21 umfasst.

Zur Befestigung der Filtereinrichtung 3 an den freien Strömungsquerschnitt 2 bzw. an der Rahmeneinrichtung 4 sind in dem gezeigten Ausführungsbeispiel drei Befestigungseinrichtungen 22 vorgesehen, von welchen nur zwei in der gezeigten Ansicht zu erkennen sind. Die Befestigungseinrichtungen 22 sind dabei an gegenüberliegenden Randabschnitten 23 angeordnet.

An der einen Seite 11 der Filtereinrichtung 3 sind zwei Befestigungseinrichtungen 22 vorgesehen, welche als Hakeneinrichtung in 5 ausgebildet sind. Mittels dieser Hakeneinrichtungen 5 wird die Filtereinrichtung 3 in entsprechende Aufnahmen 7 bzw. Langlöcher 31 der Rahmeneinrichtung 4 bzw. des Schutzgitters 12 eingehackt.

An der anderen Seite 10 der Filtereinrichtung 3 ist eine als Schnellverschlusseinrichtung 6 ausgebildete Befestigungseinrichtung 22 vorgesehen, welche durch die Filtereinrichtung 3 bzw. durch die Kassette bzw. das Gehäuse 9 der Filtereinrichtung 3 hindurchgeführt ist.

Nach dem Einhaken der Filtereinrichtung 3 mit den Hakeneinrichtungen 5 in die Aufnahmen 7 der Rahmeneinrichtung 4 wird die Filtereinrichtung 3 von einem Benutzer gegen die Rahmeneinrichtung 4 bzw. gegen das Schutzgitter 12 gedrückt und durch die Schnellverschlusseinrichtung 6 an der Rahmeneinrichtung 4 fixiert.

In dem gezeigten Ausführungsbeispiel wird so eine Dreipunktbefestigung realisiert, wobei zwei Befestigungseinrichtungen als Hakeneinrichtung 5 und eine Befestigungseinrichtung 22 als Schnellverschlusseinrichtung 6 ausgebildet ist.

Insbesondere wenn die Rahmeneinrichtung 4 als flächiges Schutzgitter 12 ausgebildet ist, kann je nach Ausgestaltung jedoch auch beispielsweise nur eine Befestigungseinrichtung 22 verwendet werden, welche dann vorzugsweise in etwa mittig an der Filtereinrichtung 3 angeordnet ist. Dann ist diese einzelne Befestigungseinrichtung 22 zweckmäßig als Schnellverschlusseinrichtung 6 ausgebildet.

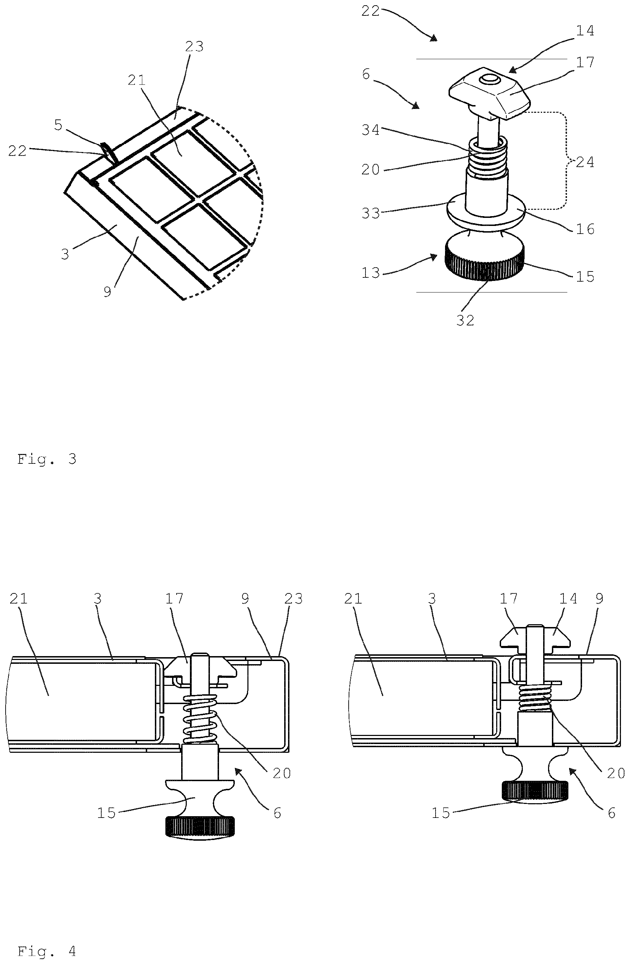

In Figur 3 sind in vergrößerten perspektivischen Darstellungen die beiden Arten von Befestigungseinrichtungen 22 dargestellt. In der linken Abbildung sieht man die als Hakeneinrichtung 5 ausgebildete Befestigungseinrichtung 22, welche in der gezeigten Ausführungsform an der einen Seite 11 der Filtereinrichtung vorgesehen sind.

Die an der anderen Seite 10 der Filtereinrichtungen 3 vorgesehene Schnellverschlusseinrichtung 6 ist in der rechten Darstellung rein schematisch dargestellt. Hier ist zu erkennen, dass die als Schnellverschlusseinrichtung 6 ausgebildete Befestigungseinrichtung 22 einen Bedienabschnitt 13 und einen Befestigungsabschnitt 14 aufweist, welche über einen Verbindungsabschnitt 24 miteinander verbunden sind.

Der Befestigungsabschnitt 14 umfasst ein Verriegelungselement 17, welches an dem Verbindungsabschnitt 24 befestigt ist. Das Verriegelungselement 17 ist in dem gezeigten Ausführungsbeispiel dabei in etwa länglich ausgebildet, sodass es in einer ersten Orientierung 18 durch eine Aufnahme 8 bzw. durch ein Langloch 31 hindurchgeführt werden kann, wobei es in einer zweiten Orientierung 19 nicht mehr durch die Aufnahme 8 bzw. Langloch 31 zurückgeführt werden kann. Dadurch kommt es durch die Drehbewegung der Schnellverschlusseinrichtung 6 beim Befestigen der Filtereinrichtung 3 zu einer Festlegung der Filtereinrichtung 3 an der Rahmeneinrichtung 4.

An dem Bedienabschnitt 13 ist ein Bedienelement 15 vorgesehen, welches in dem gezeigten Ausführungsbeispiel als Rändelgriff 32 ausgeführt ist. In anderen Ausgestaltungen kann das Bedienelement 15 beispielsweise auch durch einen Flügelgriff zur Verfügung gestellt werden. Insbesondere ist es vorteilhaft, wenn einem Benutzer eine Art Griff zur Verfügung gestellt wird, über welchen er eine ausreichende Kraft auf die Schnellverschlusseinrichtung 6 ausüben kann. An dem Bedienelement 15 kann zusätzlich oder ausschließlich auch ein Formabschnitt bzw. eine Öffnung für ein Wertwerkzeug, beispielsweise eine Schlitz-, Kreuz- und/oder Sternaufnahme vorgesehen sein.

Wie auch in den folgenden Figuren zu erkennen ist, ist die Schnellverschlusseinrichtung 6 durch die Filtereinrichtung 3 bzw. durch das Gehäuse 9 der Filtereinrichtung 3 hindurchgeführt. Damit sich beim Befestigen der Filtereinrichtung 3 an der Rahmeneinrichtung 4 die Filtereinrichtung 3 gegenüber der Rahmeneinrichtung 4 und der Schnellverschlusseinrichtung 6 abstützt, ist an dem Bedienabschnitt 14 weiterhin eine Abstützeinrichtung 16 vorgesehen, welche eine Auflagefläche 33 zur Verfügung stellt, die eine Klemmwirkung zwischen dem Verriegelungselement 17 und der Abstützeinrichtung 16 bewirkt.

Weiterhin ist ein Vorbelastungselement 20 vorgesehen, welches hier als Feder 34 ausgebildet ist. Dieses Vorbelastungselement 20 dient unter anderem dazu, eine Klemmwirkung zwischen dem Verriegelungselement 17 und dem der Abstützeinrichtung 16 herzustellen, wenn die Schnellverschlusseinrichtung 6 in der zweiten Orientierung 19 vorliegt. So kann sich die Verbindung bzw. die Fixierung der Filtereinrichtung 3 nicht unbeabsichtigt lösen.

In Figur 4 ist rein schematisch in zwei Schnittansichten durch eine Filtereinrichtung 3 dargestellt, wie eine als Schnellverschlusseinrichtung 6 ausgebildete Befestigungseinrichtung durch einen Randabschnitt 23 der Filtereinrichtung 3 bzw. des Gehäuses 9 hindurchgeführt ist.

Es ist zu erkennen, dass sich das Verriegelungselement 17 beim vollständigen Durchführen der Schnellverschlusseinrichtung 6 am Befestigungsabschnitt 14 im Wesentlichen vollständig oberhalb der Filtereinrichtung 3 befindet, sodass dieses sich durch eine Drehbewegung derart orientieren lässt, dass es an der Rahmeneinrichtung 4 festgeklemmt wird. In diesem Zustand ist die Feder 34 bzw. die das Vorbelastungselement 20 im Wesentlichen vollständig eingedrückt, sodass die Schnellverschlusseinrichtung 6 im fixierten Zustand im Wesentlichen sicher gehalten wird.

Wird die Schnellverschlusseinrichtung 6 nicht von einem Benutzer gegen die Filtereinrichtung 3 gedrückt, wird der Befestigungsabschnitt 14 automatisch durch die Federkraft des Vorbelastungselements 20 in der ersten Orientierung 18 in der Filtereinrichtung 3 versenkt.

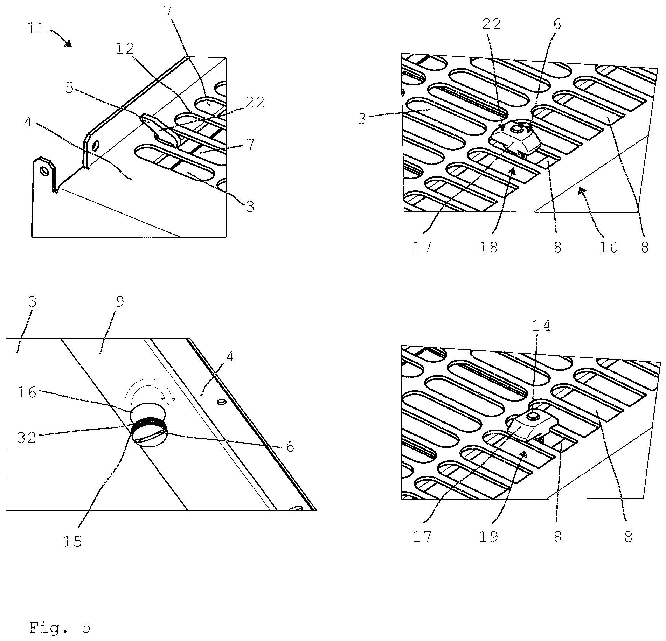

In Figur 5 ist rein schematisch in vier Ansichten die Befestigung einer Filtereinrichtung 3 mittels einer als Schnellverschlusseinrichtungen 6 ausgebildeten Befestigungseinrichtung 22 dargestellt. Dabei werden in dem gezeigten Ausführungsbeispiel auch zwei als Hakeneinrichtungen 5 ausgebildete Befestigungseinrichtungen 22 verwendet.

In der linken oberen Abbildung ist zu erkennen, dass zunächst die beiden Hakeneinrichtungen 5 an der einen Seite 11 der Filtereinrichtung in entsprechende Aufnahmen 7 der Rahmeneinrichtung 4 eingehackt werden.

Nachdem die Filtereinrichtung 3 vollständig an die als Schutzgitter 12 ausgebildete Rahmeneinrichtung 4 angedrückt wurde, wird die an der anderen Seite 10 der Filtereinrichtung 3 vorgesehene Schnellverschlusseinrichtung 6 betätigt, sodass das Verriegelungselement 17 in einer ersten Orientierung 18 durch eine Aufnahme 8 in der Rahmeneinrichtung 4 hindurchgeführt wird.

In der unteren linken Ansicht ist gezeigt, dass die Schnellverschlusseinrichtung 6 mit der Abstützeinrichtung 16 an dem Gehäuse 9 der Filtereinrichtung 3 anliegt. Über den Pfeil ist angedeutet, dass eine Festlegung der Filtereinrichtung an der Rahmeneinrichtung 4 durch eine Drehbewegung erreicht wird, wobei die Schnellverschlusseinrichtung 6 bzw. das Verriegelungselement 17 in der gezeigten Ausführungsform derart aufgebaut sind, dass eine 90°-Drehung eine Festlegung bewirkt.

In der rechten unteren Abbildung ist gezeigt, dass das Verriegelungselement 17 bzw. Schnellverschlusseinrichtung 6 um 90° gedreht wurde, sodass das Verriegelungselement 17 in der zweiten Orientierung 19 vorliegt. In dieser Orientierung kann das Verriegelungselement 17 bzw. der Befestigungsabschnitt 14 nicht mehr durch die Aufnahme 8 zurückgeführt werden, sodass eine Klemmwirkung zwischen dem Verriegelungselement 17, der Abstützeinrichtung 16 und der Filtereinrichtung 3 bewirkt wird.

Dabei wird eine gewisse Klemmkraft durch das Vorbelastungselement 20 erreicht, wie es zuvor in der Figur 4 schon beschrieben wurde. Dadurch wird unter anderem erreicht, dass das Verriegelungselement 17 relativ stabil in der zweiten Orientierung 19 gehalten wird. So kann sich die Befestigung der Filtereinrichtung 3 nicht unbeabsichtigt lösen.

### Bezugszeichenliste

- 1: Dunstabzugshaube
- 2: Strömungsquerschnitt
- 3: Filtereinrichtung
- 4: Rahmeneinrichtung
- 5: Hakeneinrichtung
- 6: Schnellverschlusseinrichtung
- 7: Aufnahme
- 8: Aufnahme
- 9: Gehäuse
- 10: Seite
- 11: Seite
- 12: Schutzgitter
- 13: Bedienabschnitt
- 14: Befestigungsabschnitt
- 15: Bedienelement
- 16: Abstützeinrichtung
- 17: Verriegelungselement
- 18: erste Orientierung
- 19: zweite Orientierung
- 20: Vorbelastungselement
- 21: Aktivkohlekern
- 22: Befestigungseinrichtung
- 23: Randabschnitt
- 24: Verbindungsabschnitt
- 25: Wrasenleitschirm
- 26: Ansaugabschnitt
- 27: Gebläse
- 28: Kamin
- 29: Aktivkohlefilter
- 30: Lochblech
- 31: Langloch
- 32: Rändelmutter
- 33: Auflagefläche
- 34: Feder

## Patentansprüche

1. Dunstabzugshaube (1) umfassend wenigstens einen Strömungsquerschnitt (2) mit wenigstens einer Filtereinrichtung (3), wobei durch den Strömungsquerschnitt geführte Luft durch die Filtereinrichtung (3) geführt wird und wobei die Filtereinrichtung (3) an wenigstens einer Rahmeneinrichtung (4) an dem Strömungsquerschnitt (2) befestigt ist, wobei die Filtereinrichtung (3) zur Befestigung an der Rahmeneinrichtung (3) wenigstens zwei Befestigungseinrichtungen (22) aufweist und wobei die Rahmeneinrichtung (4) wenigstens eine Aufnahme (7, 8) für die wenigstens eine erste Befestigungseinrichtung (22) aufweist, wobei
die wenigstens eine Befestigungseinrichtung (22) als Schnellverschlusseinrichtung (6) ausgebildet ist,
die Schnellverschlusseinrichtung (6) wenigstens einen Bedienabschnitt (13) und wenigstens einen Befestigungsabschnitt (14) und wenigstens einen Verbindungsabschnitt (24) aufweist, wobei der Verbindungsabschnitt (24) den Bedienabschnitt (13) und den Befestigungsabschnitt (14) über ein stab- und/oder stangenförmiges Element miteinander verbindet und der Befestigungsabschnitt (14) wenigstens ein Verriegelungselement (17) aufweist,
die Filtereinrichtung (3) durch eine Drehbewegung der Schnellverschlusseinrichtung (6) über den Befestigungsabschnitt (13) der Schnellverschlusseinrichtung (6) an der Rahmeneinrichtung (4) fixierbar ist, wobei sich das Verriegelungselement (17) in einer ersten Orientierung (18) in die Aufnahme (7, 8) einführbar oder durch die Aufnahme (7, 8) hindurchführbar ist und sich in einer zweiten Orientierung (19) gegen die Rahmeneinrichtung (4) abstützt
und wobei die Rahmeneinrichtung (4) wenigstens ein Schutzgitter (12) mit Freiräumen umfasst
**dadurch gekennzeichnet, dass**
die Schnellverschlusseinrichtung (6) wenigstens abschnittsweise durch die Filtereinrichtung (3) hindurchgeführt ist,
die Schnellverschlusseinrichtung (6) verliersicher und drehbar in der Filtereinrichtung (3) gehalten und gelagert ist
und
- wobei von den Freiräumen des Schutzgitters (12) oder von den Langlöchern (31) eines als Lochblech (30) ausgeführten Schutzgitters (12) die Aufnahmen (7, 8) für die Befestigungseinrichtungen (22) zur Verfügung gestellt sind.

2. Dunstabzugshaube (1) nach Anspruch 1, **dadurch gekennzeichnet, dass** die zweite Befestigungseinrichtung (22) als Hakeneinrichtung (5) ausgebildet ist.

3. Dunstabzugshaube (1) nach einem der vorhergehenden Ansprüche, **dadurch gekennzeichnet, dass** die Schnellverschlusseinrichtung (6) dazu geeignet und ausgebildet ist, eine Festlegung durch eine Drehbewegung kleiner/gleich 100°, bevorzugt kleiner/gleich 90° und besonders bevorzugt zwischen 90° und 45° zu bewirken.

4. Dunstabzugshaube (1) nach einem der vorhergehenden Ansprüche, **dadurch gekennzeichnet, dass** wenigstens eine Befestigungseinrichtung (22) an wenigstens einem Randabschnitt (23) der Filtereinrichtung (3) angeordnet ist.

5. Dunstabzugshaube (1) nach einem der vorhergehenden Ansprüche 2 bis 4, **dadurch gekennzeichnet, dass** die Filtereinrichtung (3) wenigstens ein Gehäuse (9) umfasst, an welchem die Hakeneinrichtung (5) angeordnet ist.

6. Dunstabzugshaube (1) nach einem der vorhergehenden Ansprüche 2 bis 5 **dadurch gekennzeichnet, dass** die Schnellverschlusseinrichtung (6) und die Hakeneinrichtung (5) an unterschiedlichen Seiten (10, 11) der Filtereinrichtung (3) vorgesehen sind.

7. Dunstabzugshaube (1) nach einem der vorhergehenden Ansprüche, **dadurch gekennzeichnet, dass** der Bedienabschnitt (13) wenigstens ein Bedienelement (15) aufweist.

8. Dunstabzugshaube (1) nach dem vorhergehenden Anspruch 7, **dadurch gekennzeichnet, dass** das Bedienelement (15) in etwa gleich groß und/oder größer als wenigstens ein Verbindungsabschnitt (24) zwischen dem Bedienabschnitt (13) und dem Befestigungsabschnitt (14) ausgebildet ist.

9. Dunstabzugshaube (1) nach einem der vorhergehenden Ansprüche, **dadurch gekennzeichnet, dass** der Bedienabschnitt (13) wenigstens eine Abstützeinrichtung (16) umfasst.

10. Dunstabzugshaube (1) nach dem vorhergehenden Anspruch, **dadurch gekennzeichnet, dass** das Verriegelungselement (17) im Wesentlichen länglich ausgebildet ist.

11. Dunstabzugshaube (1) nach einem der vorhergehenden Ansprüche, **dadurch gekennzeichnet, dass** die Schnellverschlusseinrichtung (6) wenigsten ein Vorbelastungselement (20) umfasst.

12. Dunstabzugshaube (1) nach dem vorhergehenden Anspruch 11, **dadurch gekennzeichnet, dass** das Vorbelastungselement (20) zusammen mit der Abstützeinrichtung (16) und der Verriegelungseinrichtung (17) eine Klemmwirkung zwischen der Filtereinrichtung (3) und der Rahmeneinrichtung (4) bewirkt.

13. Dunstabzugshaube (1) nach einem der vorhergehenden Ansprüche, **dadurch gekennzeichnet, dass** die Filtereinrichtung (3) als Aktivkohlefilter (29) und/oder als Aktivkohlekassette ausgeführt ist.

## Claims

1. Extractor hood (1) comprising at least one flow cross section (2) that has at least one filter device (3), air which is guided through the flow cross section being guided through the filter device (3) and the filter device (3) being fastened to at least one frame device (4) on the flow cross section (2), the filter device (3) comprising at least two fastening devices (22) for fastening to the frame device (3) and the frame device (4) comprising at least one receptacle (7, 8) for the at least one first fastening device (22),
the at least one fastening device (22) being in the form of a quick-acting fastener (6),
the quick-acting fastener (6) comprising at least one operating portion (13) and at least one fastening portion (14) and at least one connecting portion (24), the connecting portion (24) interconnecting the operating portion (13) and the fastening portion (14) by means of a rod-shaped and/or bar-shaped element and the fastening portion (14) comprising at least one locking element (17),
it being possible for the filter device (3) to be fixed to the frame device (4), by the fastening portion (13) of the quick-acting fastener (6), by means of a rotational movement of the quick-acting fastener (6), it being possible, in a first orientation (18), for the locking element (17) to be introduced into the receptacle (7, 8) or to be guided through said receptacle (7, 8), and, in a second orientation (19), said locking element being supported against the frame device (4), and the frame device (4) comprising at least one protective grille (12) that has spaces, **characterised in that**
the quick-acting fastener (6) is guided through the filter device (3), at least in portions,
the quick-acting fastener (6) is held and mounted in the filter device (3) so as to be rotatable and to prevent loss and
the receptacles (7, 8) being made available to the fastening devices (22) by the spaces of the protective grille (12) or by the elongate perforations (31) in a protective grille (12) designed as a perforated plate (30).

2. Extractor hood (1) according to claim 1, **characterised in that** the second fastening device (22) is in the form of a hook device (5).

3. Extractor hood (1) according to either of the preceding claims, **characterised in that** the quick-acting fastener (6) is suitable and designed to bring about fixing by means of a rotational movement of less than or equal to 100°, preferably of less than or equal to 90°, and particularly preferably of between 90° and 45°.

4. Extractor hood (1) according to any of the preceding claims, **characterised in that** at least one fastening device (22) is arranged on at least one edge portion (23) of the filter device (3).

5. Extractor hood (1) according to any of the preceding claims 2 to 4, **characterised in that** the filter device (3) comprises at least one housing (9), on which the hook device (5) is arranged.

6. Extractor hood (1) according to any of the preceding claims 2 to 5, **characterised in that** the quick-acting fastener (6) and the hook device (5) are provided on different faces (10, 11) of the filter device (3).

7. Extractor hood (1) according to any of the preceding claims, **characterised in that** the operating portion (13) comprises at least one operating element (15).

8. Extractor hood (1) according to the preceding claim 7, **characterised in that** the operating element (15) is approximately the same size and/or larger than at least one connecting portion (24) between the operating portion (13) and the fastening portion (14).

9. Extractor hood (1) according to any of the preceding claims, **characterised in that** the operating portion (13) comprises at least one support device (16).

10. Extractor hood (1) according to the preceding claim, **characterised in that** the locking element (17) is substantially elongate.

11. Extractor hood (1) according to any of the preceding claims, **characterised in that** the quick-acting fastener (6) comprises at least one preloading element (20).

12. Extractor hood (1) according to the preceding claim 11, **characterised in that** the preloading element (20) causes, together with the support device (16) and the locking device (17), a clamping effect between the filter device (3) and the frame device (4).

13. Extractor hood (1) according to any of the preceding claims, **characterised in that** the filter device (3) is designed as an activated charcoal filter (29) and/or as an activated charcoal cartridge.

## Revendications

1. Hotte aspirante (1) comportant au moins une section transversale d'écoulement (2) dotée d'au moins un dispositif de filtrage (3), de l'air guidé à travers la section transversale d'écoulement étant guidé à travers le dispositif de filtrage (3), et le dispositif de filtrage (3) étant fixé à au moins un dispositif de cadre (4) au niveau de la section transversale d'écoulement (2), le dispositif de filtrage (3) comprenant au moins deux dispositifs de fixation (22) pour la fixation au dispositif de cadre (3), et le dispositif de cadre (4) comprenant au moins un logement (7, 8) pour ledit au moins un premier dispositif de fixation (22),
ledit au moins un dispositif de fixation (22) étant réalisé sous forme de dispositif de fixation rapide (6),
le dispositif de fixation rapide (6) comprenant au moins une partie de commande (13) et au moins une partie de fixation (14) et au moins une partie de liaison (24), la partie de liaison (24) reliant l'une à l'autre la partie de commande (13) et la partie de fixation (14) par le biais d'un élément en forme de barre et/ou de tige et la partie de fixation (14) comprenant au moins un élément de verrouillage (17),
le dispositif de filtrage (3) pouvant être fixé au dispositif de cadre (4) par le biais de la partie de fixation (13) du dispositif de fixation rapide (6) au moyen d'un mouvement rotatif du dispositif de fixation rapide (6), l'élément de verrouillage (17) pouvant être inséré dans le logement (7, 8) ou pouvant être guidé à travers le logement (7, 8) dans une première orientation (18) et s'appuyant contre le dispositif de cadre (4) dans une deuxième orientation (19), et le dispositif de cadre (4) comportant au moins une grille de protection (12) dotée d'espaces libres,
**caractérisée en ce que**
le dispositif de fixation rapide (6) est guidé au moins dans certaines régions à travers le dispositif de filtrage (3),
le dispositif de fixation rapide (6) est retenu et monté de manière imperdable et rotative dans le dispositif de filtrage (3) et
les logements (7, 8) pour les dispositifs de fixation (22) étant fournis par les espaces libres de la grille de protection (12) ou par les trous oblongs (31) d'une grille de protection (12) réalisée sous forme de tôle perforée (30).

2. Hotte aspirante (1) selon la revendication 1, **caractérisée en ce que** le deuxième dispositif de fixation (22) est réalisé sous forme de dispositif d'accrochage (5).

3. Hotte aspirante (1) selon l'une des revendications précédentes, **caractérisée en ce que** le dispositif de fixation rapide (6) est approprié et conçu pour provoquer une fixation par un mouvement rotatif inférieur ou égal à 100 °, de préférence inférieur ou égal à 90° et de manière particulièrement préférée compris entre 90 ° et 45 °.

4. Hotte aspirante (1) selon l'une des revendications précédentes, **caractérisée en ce qu'**au moins un dispositif de fixation (22) est disposé sur au moins une partie de bord (23) du dispositif de filtrage (3).

5. Hotte aspirante (1) selon l'une des revendications précédentes 2 à 4, **caractérisée en ce que** le dispositif de filtrage (3) comporte au moins un boîtier (9) sur lequel le dispositif d'accrochage (5) est disposé.

6. Hotte aspirante (1) selon l'une des revendications précédentes 2 à 5, **caractérisée en ce que** le dispositif de fixation rapide (6) et le dispositif d'accrochage (5) sont prévus sur des côtés (10, 11) différents du dispositif de filtrage (3).

7. Hotte aspirante (1) selon l'une des revendications précédentes, **caractérisée en ce que** la partie de commande (13) comprend au moins un élément de commande (15).

8. Hotte aspirante (1) selon la revendication 7 précédente, **caractérisée en ce que** l'élément de commande (15) est réalisé de manière à être approximativement de même taille et/ou plus grand qu'au moins une partie de liaison (24) entre la partie de commande (13) et la partie de fixation (14).

9. Hotte aspirante (1) selon l'une des revendications précédentes, **caractérisée en ce que** la partie de commande (13) comporte au moins un dispositif d'appui (16).

10. Hotte aspirante (1) selon la revendication précédente, **caractérisée en ce que** l'élément de verrouillage (17) est réalisé de manière sensiblement oblongue.

11. Hotte aspirante (1) selon l'une des revendications précédentes, **caractérisée en ce que** le dispositif de fixation rapide (6) comporte au moins un élément de précontrainte (20).

12. Hotte aspirante (1) selon la revendication 11 précédente, **caractérisée en ce que** l'élément de précontrainte (20) provoque, conjointement avec le dispositif d'appui (16) et le dispositif de verrouillage (17), une action de serrage entre le dispositif de filtrage (3) et le dispositif de cadre (4).

13. Hotte aspirante (1) selon l'une des revendications précédentes, **caractérisée en ce que** le dispositif de filtrage (3) est réalisé sous forme de filtre à charbon actif (29) et/ou sous forme de cartouche à charbon actif.
